# EUROPEAN PATENT SPECIFICATION

(11) **EP 3 367 853 B1**
(45) Date of publication and mention of the grant of the patent: **08.01.2020**
(21) Application number: 16787540.0
(22) Date of filing: 21.10.2016
(51) Int. Cl.: A47J 31/36, A47J 31/44, A47J 31/60

(54) **WASTE DISPOSAL UNIT**
ABFALLENTSORGUNGSEINHEIT
UNITÉ D'ÉLIMINATION DE DÉCHETS

(30) Priority: 26.10.2015 GB 201518907
(43) Date of publication of application: 05.09.2018
(73) Proprietor: Costa Express Limited, High Wycombe, Buckinghamshire HP10 9QR (GB)
(72) Inventor: COX, Timothy, High Wycombe Buckinghamshire HP10 9QR (GB); CORKER, William, High Wycombe Buckinghamshire HP10 9QR (GB); TAYLOR, Nathan, High Wycombe Buckinghamshire HP10 9QR (GB)
(74) Representative: Atkins, James Gordon John
(86) International application number: PCT/GB2016/053297
(87) International publication number: WO 2017/072495

(56) References cited:
- EP-A1- 2 181 630
- FR-A1- 2 668 953
- GB-A- 956 109
- GB-A- 2 514 394
- US-A- 2 753 121

## Description

The invention relates to a waste disposal unit and a beverage dispensing machine comprising such a waste disposal unit.

### Background

Existing beverage dispensing machines employ various methods for handling liquid and solid waste. Some beverage dispensing machines include a waste disposal unit for receiving beverage waste elements and liquid waste. The waste disposal unit typically includes a waste receptacle which receives the waste, an outlet or flush port and a pump for pumping waste out of the machine.

EP2181630 discloses a hot beverage preparation machine comprising a liquid inlet and a mixed water outlet, between which are arranged a brewing unit and a receiving device. The receiving device receives solid compacted waste from the brewing unit. A rotatable impeller and a cutting device are provided for cutting or separating the compacted waste.

Existing waste disposal units suffer from various problems. One such problem is that the interior space of the waste disposal unit is difficult to keep clean and, over time, becomes coated with waste, for example, solid waste particles such as used coffee grounds. This is a particular problem where solid waste (such as a coffee puck i.e. compressed used coffee grounds) is dispensed into a liquid-containing waste receptacle from a height, as this can cause a splash-back effect. In order to maintain a good standard of hygiene, existing waste disposal units require regular manual cleaning which is time consuming and expensive.

There is a need for an improved waste disposal unit which addresses these issues.

### Summary of the invention

The invention is set out in the claims.

### Figures

Embodiments of the invention will now be described, by way of example, with reference to the drawings of which:
Figure 1 shows a cross section of an embodiment of a waste disposal unit.
Figure 2 shows a side view cross section of a beverage dispensing machine comprising a waste disposal unit as described herein.

### Detailed description

In a first aspect, the invention provides a waste disposal unit comprising
a waste receptacle providing an enclosed space and being arranged to receive a waste element from a waste conduit, the waste receptacle comprising a discharge outlet;
a rotatable vessel disposed within the waste receptacle, the rotatable vessel having a base, a side wall and an opening above the base, wherein the rotatable vessel is arranged to eject liquid from the opening during rotation; and
a first liquid supply element configured to supply liquid to the rotatable vessel.

The waste disposal unit of the present invention is adapted to receive, process and remove waste efficiently and importantly has a self-clean function which enables a high standard of hygiene to be maintained during use. Self-cleaning is, in part, achieved by the rotatable vessel disposed within the waste receptacle. In use, the vessel is at least partially filled with liquid and may be completely filled or partially overflowing when rotation of the vessel begins. The vessel comprises an opening above its base. When the vessel is rotated, liquid is ejected from the vessel via the opening by centrifugal force. The vessel is positioned within the waste receptacle such that the ejected liquid rinses one or more internal surfaces of the waste receptacle.

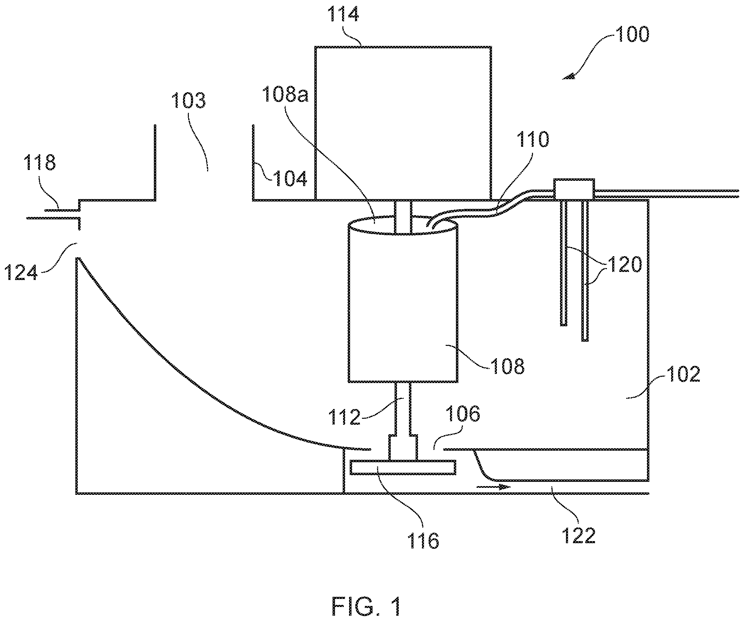

The waste disposal unit can be further understood with reference to Figure 1.

A waste disposal unit 100 comprises a waste receptacle 102 arranged to receive a waste element from a waste conduit 104. The waste conduit 104 may be a component of the waste disposal unit 100 or may be a component of an apparatus in which the waste disposal unit 100 is deployed, such as a beverage dispensing machine. The waste receptacle 102 is provided with a primary waste inlet 103. The primary waste inlet 103 is preferably in an upper surface of the waste receptacle 102. The waste receptacle 102 may be provided with one or more secondary waste inlets 124. A secondary waste inlet may be provided in a side wall of the waste receptacle 102. In one embodiment, a primary waste inlet 103 is arranged to receive solid waste, such as a coffee puck, that is, compressed used coffee grounds from a beverage dispensing machine, and a secondary waste inlet 124 is arranged to receive liquid waste. In use, liquid waste may, for example, drain into the secondary waste inlet 124 from a drip trap of a beverage dispensing machine.

The waste receptacle 102 comprises a discharge outlet 106 through which waste is discharged from the waste receptacle during operation of the unit. Preferably, the discharge outlet 106 is provided at the base of the waste receptacle 102. The discharge outlet may drain to a mains sewerage system via an outlet conduit 122. The outlet conduit 122 may comprise a valve (not shown) which may be opened in order to drain the waste receptacle. The base of the waste receptacle 102 may slope from the secondary waste inlet 124 (where present) towards the discharge outlet 106 to aid flow of liquid waste towards the discharge outlet 106.

The waste disposal unit 100 comprises a rotatable vessel 108 disposed within the waste receptacle 102. This may be positioned vertically above the discharge outlet as shown in Figure 1. In the embodiment shown in Figure 1, the rotatable vessel 108 is cylindrical in shape. However, other designs could be used, for example any design having a generally circular cross section. For example, the rotatable vessel 108 may be generally cylindrical and flair outwardly at its top. In an embodiment, a side wall of the rotatable vessel 108 is inclined outwardly away from the vertical. This helps move liquid contained within the vessel 108 in an upward direction upon rotation for ejection from the vessel 108. The rotatable vessel 108 may comprise, on an internal surface thereof, one or more projections to aid the transfer of rotational energy to liquid in the vessel. Such projections may be provided in the form of one or more pillars or paddles and may extend vertically from the base of the vessel.

The rotatable vessel 108 has an opening 108a above its base through which liquid contained in the vessel is ejected during rotation of the vessel 108 by centrifugal force. The opening 108a may have a diameter equal to an internal diameter of the rotatable vessel 108. Alternatively, the opening may be smaller than the internal diameter of the rotatable vessel 108. In some embodiments the opening is at the top of the vessel 108. An opening may alternatively or additionally be provided in a side wall of the vessel 108. Thus, the vessel 108 may include a plurality of openings to facilitate the ejection of liquid. Preferably any opening in the vessel 108 is located in an upper portion of the vessel 108. In some embodiments, the vessel 108 does not include any openings in its side wall or base. The vessel 108 and opening 108a are preferably arranged to eject liquid towards an internal wall and upper interior surface of the receptacle 102 or more generally, an upper portion of the enclosed space of the waste receptacle 102, upon rotation of the vessel 108. This provides a rinsing/cleaning effect to remove waste, for example solid particles of waste such as used coffee grounds, from the internal surfaces of the waste receptacle 102. In use, the vessel may be rotated at a speed of about 1000-4000 rpm.

The vessel may have a single continuous side wall. Preferably, the external surface of the side wall is substantially free of protrusions i.e. the vessel preferably has a smooth outer surface. This advantageously limits agitation and/or mixing of waste contained in the waste receptacle 102 upon rotation of the vessel 108. Such agitation can spread waste around the internal surfaces of the waste receptacle 102 which is counterproductive, as the primary purpose of the vessel 108 is to facilitate the removal of waste from the internal surfaces of the waste receptacle 102 to maximise hygiene. In a preferred embodiment, the rotatable vessel 108 has a smooth external surface with no protrusions in order to minimise the likelihood of splashing of waste liquid around the inside of the waste receptacle 102.

The waste disposal unit 100 further comprises a first liquid supply element 110 which is configured to supply liquid to the rotatable vessel 108. In use, liquid may be supplied to the vessel 108 before rotation and/or during rotation. For example, the vessel may be partially or completely filled prior to rotation. The first liquid supply element 110 may be arranged to supply liquid to the vessel 108 via the opening 108a or via a separate opening. The supply of liquid via the first liquid supply element 110 may be controlled by a valve. The valve may be opened at pre-determined intervals or in response to a waste threshold level of the waste receptacle.

The waste disposal unit 100 may be provided with a shaft 112 running through a central axis of the vessel 108. Preferably, all regions of the shaft 112 which may come into contact with waste during use have a smooth external surface to minimise agitation of the waste. The shaft may be coupled to a motor 114 which drives rotation of the shaft 112 and the rotatable vessel 108. Preferably the motor 114 is located outside the waste receptacle, for example on top of the waste receptacle 102. This protects the motor 114 from liquid ingress. The motor 114 may be any suitable type, such as a UL compatible AC motor e.g. 240 V, 50 or 60Hz.

In some embodiments, the waste disposal unit 100 includes a pump impeller 116. This is preferably provided below the discharge outlet 106. The pump impeller 116 helps to evacuate waste from the waste receptacle 102 via the discharge outlet 106 by pumping waste in the direction of the arrow via an outlet conduit 122. In an embodiment, the pump impeller 116 shares a common shaft 112 with the rotatable vessel 108 such that the pump impeller rotates with the rotatable vessel 108.

A second liquid supply element 118 may be provided in order to supply liquid directly to the waste receptacle 102. This may be positioned at a rim of the waste receptacle 102, at an opposing end of the receptacle 102 to the rotatable vessel 108. The liquid supply element may include multiple openings or nozzles arranged to direct liquid into the waste receptacle 102. Liquid supplied by the second liquid supply element 118 may, for example, include cleaning chemicals and/or hot water. In use, a second liquid supply element 118 may direct liquid around one or more internal surfaces of the waste receptacle 102 to provide a rinsing effect, thereby complementing the cleaning effect provided by the rotatable vessel 108. The second liquid supply element 118 may be particularly useful for cleaning areas of the waste receptacle 108 where waste, such as used coffee grounds from falling coffee pucks, tends to collect. Further liquid supply elements may be provided as necessary.

The waste disposal unit 100 may be provided with one or more level sensors 120. Sensors 120 may provide a plurality of functions. For example sensors 120 may control one or more functions of the waste module, prevent overflow, raise alarms that prevent further use of a beverage machine in which the waste unit is deployed until the alarm is cleared, provide alarms to a technical service centre via a telemetry system and/or provide diagnostic information for underperformance/faults for example with the waste disposal unit 100 or the infeed liquid supply. The sensors typically extend into the waste receptacle 102, for example from an upper surface of the waste receptacle 102, and are configured to detect a waste level threshold inside the waste receptacle 102. In an alternative embodiment, sensors, for example, capacitive sensors, are provided outside the waste receptacle 102. Upon detection of a waste threshold level, the sensor 120 may send a signal to a controller (not shown) which activates one or more functions of the waste disposal unit. For example, the controller may activate the pump impeller 116 (where present) in response to a sensed threshold level of waste in the waste receptacle 102. Alternatively, or additionally, the controller may activate rotation of the rotatable vessel in response to a sensed waste level. The rotatable vessel 108 and pump impeller 116 may be activated simultaneously. Alternatively, activation of the pump impeller 116 may precede activation of the vessel 108 or vice versa. The controller may cause liquid to be supplied to the rotatable vessel 108 via the first liquid supply element 110, e.g. by opening a valve in response to a sensed waste level. This may precede activation of the rotatable vessel 108. Alternatively or additionally, liquid may be supplied directly to the waste receptacle 102 via the second liquid supply element 118 where present in response to a sensed waste level. The controller may deactivate one or more functions of the waste disposal unit e.g. deactivate rotation of the vessel and/or the pump impeller, and/or prevent flow of liquid via the first and/or second liquid supply elements when the level of waste is falls below the threshold level, as detected by the sensors 120.

In an embodiment, the waste disposal unit 100 includes a high level sensor and a low level sensor, both of which may extend vertically into the waste receptacle 102 from an upper surface of the waste receptacle 102 as shown in Figure 1. The low level sensor extends further into the waste receptacle 102 than the high level sensor. The sensors may be configured such that when waste reaches the high level sensor, the pump impeller 116 is activated e.g. for a fixed period of time or until the low level sensor opens, whichever is longer. This function allows the unit to empty when the waste reaches a certain level in the waste receptacle 102. The upper level sensor can show when there is an issue with clean water flow into the unit - i.e. insufficient flow. For example, Where the waste disposal unit 100 is used with a beverage dispensing machine, if the high level sensor does not activate during a flush cycle (for which the time is configurable) then an alarm may be raised to the beverage machine preventing further operation of the machine until the alarm is cleared and optionally also to a technical service centre via a telemetry device to indicate that there is an issue with the site water supply. The low level sensor preferably activates a "pump off" function if the time to empty the waste receptacle 102 is greater than a configurable setting. Again, if the waste disposal unit 102 is used in combination with a beverage dispensing machine, an alarm in the machine may be raised to prevent further use of the machine until the alarm is cleared and optionally to a technical service centre via a telemetry device to indicate that there is a problem with either the waste pump or the site waste services.

The waste disposal unit 100 may comprise an overflow sensor e.g. a float switch (not shown). Preferably, when an overflow level is sensed, liquid supply to the waste disposal unit 102 is prevented and the pump impeller 116 is activated. Where the waste disposal unit is used with a beverage dispensing machine, the overflow sensor may trigger an alarm via a telemetry device to a technical service centre to indicate that there may be a problem with the pump, the high level sensor or the overflow sensor.

Where a high level sensor, a low level sensor and an overflow sensor are provided, the logic within the sensors may be coupled such that an illogical combination of sensor positions (e.g. low water sensor low, high water sensor high) will indicate an issue with the correct functioning of the sensors. Where the waste disposal unit is used with a beverage dispensing machine, an alarm may be sent to the machine to prevent further use before the alarm is cleared and optionally to a technical service centre via a telemetry device to indicate that there is a problem with the functioning of the sensors.

Regardless of whether or not sensors 120 are present, the waste disposal unit may be arranged to deliver liquid to the rotatable vessel 108 via the first liquid supply element 110 and/or directly to the waste receptacle 102 via the second liquid supply element 118 (where present) at predetermined intervals. This rotatable vessel 108 may be activated at predetermined intervals, for example once it has been at least partially filled by the first liquid supply element 110. Similarly, the pump impeller 116 may be activated at predetermined intervals. The predetermined intervals may be hourly, daily, weekly or monthly, for example. Where the waste disposal unit 100 is used with a beverage dispensing machine, the waste disposal unit 100 may be configured to commence a cleaning program after a set number of beverages have been dispensed from the machine, for example every five drinks, every ten drinks or every fifteen drinks. Such a cleaning program may involve supplying liquid via the first and/or second liquid supply elements, and/or activating the rotatable vessel and/or activating of the pump impeller 116 (where present).

The automated self-cleaning of the waste receptacle, whether in response to a sensed threshold level or at pre-determined intervals, provides a key advantage in that it reduces the frequency and of extent of manual cleaning required. This is particularly useful where the waste unit is deployed in a self-contained beverage dispensing machine of the type described in WO 2014/075833 as it minimises downtime thereby maximising the ability of the machine to generate revenue.

In a second aspect, the invention provides a beverage dispensing machine comprising a waste disposal unit as described herein.

The beverage dispensing machine may be of the type described in WO 2014/075833. For example, the machine can be a large or smaller sized floor mounted model for commercial or office use, or a desktop or work surface mounted model.

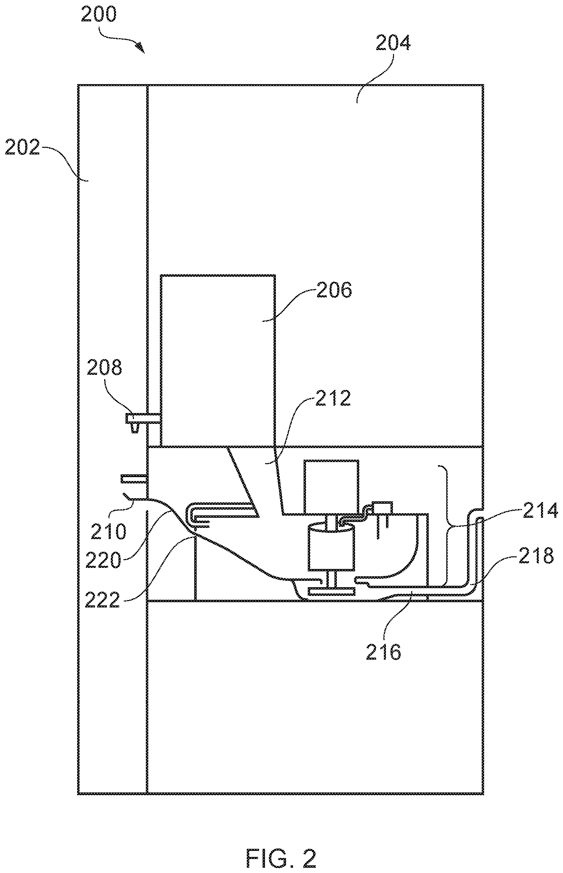

The second aspect of the invention can be further understood with reference to Figure 2.

Figure 2 shows a side view cross section of a free standing beverage dispensing machine 200 having a door 202 and a body 204. The body 204 houses a plurality of modules including a brewer module 206. In use, beverages are dispensed from the machine via a nozzle 208 which protrudes into a cavity in the door 202. Positioned below the nozzle 208 is a drip tray 210, arranged to catch liquid waste e.g. excess liquid dispensed from the nozzle 208. A waste conduit 212 is disposed vertically below the brewer module 206. The brewer module 206 is arranged to eject a compacted beverage waste element into the waste conduit 212. Disposed below the waste conduit 212 is a waste disposal unit 214 as described herein. The waste conduit 212 is arranged to deliver the waste element into the waste receptacle of the waste disposal unit 214. A channel 222 is provided which runs between the drip tray 210 and a secondary waste inlet 222 in the waste disposal unit 214. This allows liquid waste to run into the waste disposal unit 214 from the drip tray 210. The waste disposal unit 214 includes an outlet conduit 216 which is connected to a discharge pipe 218 for discharging waste from the machine 200. The discharge pipe 218 may be provided with a non-return valve (not shown) to prevent backflow into the waste disposal unit 214.

Although this aspect of the invention is illustrated by reference to a free-standing beverage machine, it will be appreciated that the modular nature of the waste disposal unit allows it to be used with a variety of beverage dispensing machines including desktop or work surfaces mounted machines.

## Claims

1. A waste disposal unit (100, 214) comprising
a waste receptacle (102) providing an enclosed space and being arranged to receive a waste element from a waste conduit (104, 212), the waste receptacle (102) comprising a discharge outlet (106);
**characterised in that** the waste disposal unit (100, 214) comprises a rotatable vessel (108) disposed within the waste receptacle (102), the rotatable vessel (108) having a base, a side wall and an opening (108a) above the base, wherein the rotatable vessel (108) is arranged to eject liquid from the opening during rotation; and a first liquid supply element (110) configured to supply liquid to the rotatable vessel (108).

2. The waste disposal unit (100, 214) of claim 1, wherein the rotatable vessel (108) has a generally circular cross section.

3. The waste disposal unit (100, 214) of claim 1 or claim 2, wherein the opening (108a) is not in the side wall or base of the rotatable vessel (108).

4. The waste disposal unit (100, 214) of any preceding claim, wherein the opening (108a) has a diameter equal to an internal diameter of the rotatable vessel (108).

5. The waste disposal unit (100, 214) of any preceding claim, further comprising a shaft (112) which runs through a central axis of the rotatable vessel (108), the shaft (112) being coupled to a motor (114) which drives rotation of the shaft (112) and the rotatable vessel (108), optionally wherein the motor (114) is located outside the waste receptacle (102).

6. The waste disposal unit (100, 214) of any preceding claim, further comprising a pump impeller (116) in communication with the discharge outlet (106).

7. The waste disposal unit (100, 214) of any preceding claim, wherein the rotatable vessel (108) is arranged to eject liquid towards an upper portion of the enclosed space of the waste receptacle (102).

8. The waste disposal unit (100, 214) of any preceding claim, further comprising a second liquid supply element (118) arranged to supply liquid directly to the waste receptacle (102).

9. The waste disposal unit (100, 214) of claim 8, wherein the second liquid supply element (118) directs liquid around an internal surface of the receptacle (102) to provide a rinsing effect.

10. The waste disposal unit (100, 214) of any preceding claim, arranged to deliver liquid to the rotatable vessel (108) at predetermined intervals and subsequently or simultaneously activate rotation of the rotatable vessel (108).

11. The waste disposal unit (100, 214) of any one of claims 6-10, arranged to activate the pump impeller (116) at predetermined intervals, optionally wherein the pump impeller (116) and rotatable vessel (108) are activated simultaneously.

12. The waste disposal unit (100, 214) of any preceding claim, wherein the waste disposal unit (100, 214) comprises one or more level sensors (120), optionally wherein the waste disposal unit (100, 214) is arranged to supply liquid to the rotatable vessel (108) and subsequently or simultaneously activate rotation of the rotatable vessel (108) when a waste level threshold is detected.

13. The waste disposal unit (100, 214) of claim 12 when dependent on claim 6, arranged to activate the pump impeller (116) when a waste level threshold is detected, optionally wherein the pump impeller (116) and rotatable vessel (108) are activated simultaneously.

14. The waste disposal unit (100, 214) of any preceding claim, wherein the rotatable vessel (108) has a smooth external surface that is substantially free of projections.

15. A beverage dispensing machine (200) comprising a waste disposal unit (100, 214) as defined in any preceding claim, optionally wherein the beverage dispensing machine (200) comprises a brewer module (206) and, vertically disposed below, a waste conduit (104, 212), the brewer module (206) being arranged to eject a compacted beverage waste element into the waste conduit (104, 212), the waste conduit (104, 212) being disposed to deliver the waste element to the waste receptacle (102) of the waste disposal unit (100, 214).

## Patentansprüche

1. Abfallentsorgungseinheit (100, 214), umfassend:
ein Abfallbehältnis (102), das einen geschlossenen Raum bereitstellt und angeordnet ist, um ein Abfallelement aus einem Abfallkanal (104, 212) aufzunehmen, wobei das Abfallbehältnis (102) einen Abgabeauslass (106) umfasst;
**dadurch gekennzeichnet, dass** die Abfallentsorgungseinheit (100, 214) einen drehbaren Behälter (108) umfasst, der innerhalb des Abfallbehältnisses (102) angeordnet ist, wobei der drehbare Behälter (108) eine Basis, eine Seitenwand und eine Öffnung (108a) über der Basis aufweist, wobei der drehbare Behälter (108) angeordnet ist, um während der Drehung aus der Öffnung Flüssigkeit auszustoßen; und ein erstes Flüssigkeitszuführelement (110), das dazu ausgelegt ist, dem drehbaren Behälter (108) Flüssigkeit zuzuführen.

2. Abfallentsorgungseinheit (100, 214) nach Anspruch 1, wobei der drehbare Behälter (108) einen allgemein ringförmigen Querschnitt aufweist.

3. Abfallentsorgungseinheit (100, 214) nach Anspruch 1 oder Anspruch 2, wobei sich die Öffnung (108a) nicht in der Seitenwand oder Basis des drehbaren Behälters (108) befindet.

4. Abfallentsorgungseinheit (100, 214) nach einem der vorangehenden Ansprüche, wobei die Öffnung (108a) einen Durchmesser aufweist, der einem Innendurchmesser des drehbaren Behälters (108) gleicht.

5. Abfallentsorgungseinheit (100, 214) nach einem der vorangehenden Ansprüche, ferner umfassend eine Welle (112), die durch eine zentrale Achse des drehbaren Behälters (108) verläuft, wobei die Welle (112) mit einem Motor (114) gekoppelt ist, der eine Drehung der Welle (112) und des drehbaren Behälters (108) antreibt, wobei sich der Motor (114) optional außerhalb des Abfallbehältnisses (102) befindet.

6. Abfallentsorgungseinheit (100, 214) nach einem der vorangehenden Ansprüche, ferner umfassend ein Pumpenrad (116) im Austausch mit dem Abgabeauslass (106).

7. Abfallentsorgungseinheit (100, 214) nach einem der vorangehenden Ansprüche, wobei der drehbare Behälter (108) angeordnet ist, um Flüssigkeit in Richtung eines oberen Abschnitts des geschlossenen Raums des Abfallbehältnisses (102) auszustoßen.

8. Abfallentsorgungseinheit (100, 214) nach einem der vorangehenden Ansprüche, ferner umfassend ein zweites Flüssigkeitszuführelement (118), das angeordnet ist, um Flüssigkeit dem Abfallbehältnis (102) direkt zuzuführen.

9. Abfallentsorgungseinheit (100, 214) nach Anspruch 8, wobei das zweite Flüssigkeitszuführelement (118) Flüssigkeit um eine Innenfläche des Behältnisses (102) leitet, um einen Spüleffekt bereitzustellen.

10. Abfallentsorgungseinheit (100, 214) nach einem der vorangehenden Ansprüche, angeordnet, um dem drehbaren Behälter (108) Flüssigkeit in vorbestimmten Intervallen zuzuführen und danach oder gleichzeitig eine Drehung des drehbaren Behälters (108) zu aktivieren.

11. Abfallentsorgungseinheit (100, 214) nach einem der Ansprüche 6-10, angeordnet, um das Pumpenrad (116) in vorbestimmten Intervallen zu aktivieren, wobei das Pumpenrad (116) und der drehbare Behälter (108) optional gleichzeitig aktiviert werden.

12. Abfallentsorgungseinheit (100, 214) nach einem der vorangehenden Ansprüche, wobei die Abfallentsorgungseinheit (100, 214) einen oder mehrere Niveausensoren (120) umfasst, wobei die Abfallentsorgungseinheit (100, 214) optional angeordnet ist, um dem drehbaren Behälter (108) Flüssigkeit zuzuführen und danach oder gleichzeitig eine Drehung des drehbaren Behälters (108) zu aktivieren, wenn ein Abfallniveauschwellenwert erkannt wird.

13. Abfallentsorgungseinheit (100, 214) nach Anspruch 12, wenn abhängig von Anspruch 6, angeordnet, um das Pumpenrad (116) zu aktivieren, wenn ein Abfallniveauschwellenwert erkannt wird, wobei das Pumpenrad (116) und der drehbare Behälter (108) optional gleichzeitig aktiviert werden.

14. Abfallentsorgungseinheit (100, 214) nach einem der vorangehenden Ansprüche, wobei der drehbare Behälter (108) eine glatte Außenfläche aufweist, die im Wesentlichen frei von Vorsprüngen ist.

15. Getränkeabgabemaschine (200), umfassend eine Abfallentsorgungseinheit (100, 214) nach einem der vorangehenden Ansprüche, wobei die Getränkeabgabemaschine (200) optional ein Zubereitungsmodul (206) und, vertikal darunter angeordnet, einen Abfallkanal (104, 212) umfasst, wobei das Zubereitungsmodul (206) angeordnet ist, um ein verdichtetes Getränkeabfallelement in den Abfallkanal (104, 212) auszustoßen, wobei der Abfallkanal (104, 212) angeordnet ist, um das Abfallelement zu dem Abfallbehältnis (102) der Abfallentsorgungseinheit (100, 214) zu befördern.

## Revendications

1. Unité d'élimination de déchets (100, 214) comprenant
un réceptacle à déchets (102) fournissant un espace clos et étant agencé pour recevoir un déchet depuis un conduit de déchets (104, 212), le réceptacle à déchets (102) comprenant une sortie d'évacuation (106) ;
**caractérisée en ce que** l'unité d'élimination de déchets (100, 214) comprend un récipient rotatif (108) disposé à l'intérieur du réceptacle à déchets (102), le récipient rotatif (108) comportant une base, une paroi latérale et une ouverture (108a) au-dessus de la base, dans laquelle le récipient rotatif (108) est agencé pour éjecter un liquide par l'ouverture pendant la rotation ; et un premier élément d'alimentation en liquide (110) conçu pour alimenter en liquide le récipient rotatif (108) .

2. Unité d'élimination de déchets (100, 214) selon la revendication 1, dans laquelle le récipient rotatif (108) présente une section transversale généralement circulaire.

3. Unité d'élimination de déchets (100, 214) selon la revendication 1 ou 2, dans laquelle l'ouverture (108a) ne se trouve pas dans la paroi latérale ni dans la base du récipient rotatif (108).

4. Unité d'élimination de déchets (100, 214) selon l'une quelconque des revendications précédentes, dans laquelle l'ouverture (108a) présente un diamètre égal à un diamètre interne du récipient rotatif (108).

5. Unité d'élimination de déchets (100, 214) selon l'une quelconque des revendications précédentes, comprenant en outre un arbre (112) qui passe à travers un axe central du récipient rotatif (108), l'arbre (112) étant couplé à un moteur (114) qui entraîne l'arbre (112) et le récipient rotatif (108) en rotation, facultativement dans laquelle le moteur (114) est situé à l'extérieur du réceptacle à déchets (102).

6. Unité d'élimination de déchets (100, 214) selon l'une quelconque des revendications précédentes, comprenant en outre un rotor de pompe (116) en communication avec la sortie d'évacuation (106).

7. Unité d'élimination de déchets (100, 214) selon l'une quelconque des revendications précédentes, dans laquelle le récipient rotatif (108) est agencé pour éjecter le liquide en direction d'une partie supérieure de l'espace clos du réceptacle à déchets (102).

8. Unité d'élimination de déchets (100, 214) selon l'une quelconque des revendications précédentes, comprenant en outre un second élément d'alimentation en liquide (118) agencé pour alimenter directement en liquide le réceptacle à déchets (102).

9. Unité d'élimination de déchets (100, 214) selon la revendication 8, dans laquelle le second élément d'alimentation en liquide (118) dirige le liquide autour d'une surface interne du réceptacle (102) pour produire un effet de rinçage.

10. Unité d'élimination de déchets (100, 214) selon l'une quelconque des revendications précédentes, agencée pour délivrer un liquide au récipient rotatif (108) à intervalles prédéterminés et pour activer ensuite ou simultanément la rotation du récipient rotatif (108).

11. Unité d'élimination de déchets (100, 214) selon l'une quelconque des revendications 6 à 10, agencée pour activer le rotor de pompe (116) à intervalles prédéterminés, facultativement dans laquelle le rotor de pompe (116) et le récipient rotatif (108) sont activés simultanément.

12. Unité d'élimination de déchets (100, 214) selon l'une quelconque des revendications précédentes, dans laquelle l'unité d'élimination de déchets (100, 214) comprend un ou plusieurs capteurs de niveau (120), facultativement dans laquelle l'unité d'élimination de déchets (100, 214) est agencée pour alimenter en liquide le récipient rotatif (108) et pour activer ensuite ou simultanément la rotation du récipient rotatif (108) lorsqu'un seuil de niveau de déchets est détecté.

13. Unité d'élimination de déchets (100, 214) selon la revendication 12 lorsqu'elle dépend de la revendication 6, agencée pour activer le rotor de pompe (116) lorsqu'un seuil de niveau de déchets est détecté, facultativement dans laquelle le rotor de pompe (116) et le récipient rotatif (108) sont activés simultanément.

14. Unité d'élimination de déchets (100, 214) selon l'une quelconque des revendications précédentes, dans laquelle le récipient rotatif (108) présente une surface externe lisse qui est sensiblement exempte de saillies.

15. Machine de distribution de boissons (200) comprenant une unité d'élimination de déchets (100, 214) selon l'une quelconque des revendications précédentes, facultativement dans laquelle la machine de distribution de boissons (200) comprend un module de brassage (206) et, disposé verticalement dessous, un conduit de déchets (104, 212), le module de brassage (206) étant agencé pour éjecter un déchet de boissons compressé dans le conduit de déchets (104, 212), le conduit de déchets (104, 212) étant disposé de façon à délivrer le déchet dans le réceptacle à déchets (102) de l'unité d'élimination de déchets (100, 214).
